# EUROPÄISCHE PATENTSCHRIFT

(11) **EP 4 311 642 B1**
(45) Veröffentlichungstag und Bekanntmachung des Hinweises auf die Patenterteilung: **04.09.2024**
(21) Anmeldenummer: 22186880.5
(22) Anmeldetag: 26.07.2022
(51) Int. Cl.: B29B 7/76, B29B 7/74, B29B 7/60, C08J 3/20, C08L 75/04, C09D 175/04, B29B 7/32

(54) **VORRICHTUNG ZUR BEREITSTELLUNG EINES KUNSTSTOFFES, SOWIE DARAUF BEZOGENES VERFAHREN ZUM AUSDOSIEREN DES KUNSTSTOFFES**
DEVICE FOR SUPPLYING A PLASTIC MATERIAL, AND RELATED METHOD FOR DOSING THE PLASTIC MATERIAL
DISPOSITIF DE FOURNITURE D'UNE MATIÈRE PLASTIQUE, AINSI QUE PROCÉDÉ ASSOCIÉ DE DOSAGE DE LA MATIÈRE PLASTIQUE

(43) Veröffentlichungstag der Anmeldung: 31.01.2024
(73) Patentinhaber: Henkel AG & Co. KGaA, 40589 Düsseldorf (DE)
(72) Erfinder: METZLER, Mario, 6844 Altach (AT); BALDAUF, Guenter, 6914 Hohenweiler (AT); STANCHEVA-SCHWIND, Daniela, 6820 Frastanz (AT); SCHNEIDER, Pascal, 6900 Möggers (AT)
(74) Vertreter: Wagner Albiger & Partner Patentanwälte mbB

(56) Entgegenhaltungen:
- DE-A1- 102004 049 666
- DE-A1- 4 108 186
- DE-B3- 102005 052 343
- DE-C1- 3 841 671
- DE-U1- 202005 020 930
- JP-A- 2009 051 181
- US-A1- 2006 071 358

## Beschreibung

Die Erfindung betrifft eine Vorrichtung zur Bereitstellung eines Kunstoffes, der aus einer A-Komponente und einer B-Komponente sowie optional einem ersten Zusatzstoff herstellbar ist. Zudem betrifft die Erfindung eine Verfahren zum Ausdosieren des Kunststoffes.

Aus der DE 20 2005 020 930 U1 ist eine Vorrichtung bekannt, in der als A-Komponente Polyol und als B-Komponente Isocyanat zur Herstellung von Polyurethan verwendet werden. Die Vorrichtung weist einen Behälter auf, in dem Polyol vorgehalten wird. Zudem weist die Vorrichtung eine erste Quelle für den ersten Zusatzstoff in Form eines ersten Farbstoffes auf. Zudem weist die Vorrichtung zusätzlich eine zweite Quelle für einen zweiten Zusatzstoff (zweiter Farbstoff) auf. In einer Mischkammer werden die Polyol-Komponente und die Isocyanat-Komponente zur Bildung des Polyurethans vermischt. Das Polyurethan wird aus dieser Mischkammer ausdosiert und auf ein zu beschichtendes Substrat zur Ausbildung einer Polyurethan-Oberfläche gesprüht.

Eine Zusatzventileinheit oder Farbventileinheit ist strömungstechnisch vor einem A-Eingang oder Polyol-Eingang der Mischkammer geschaltet. Stromaufwärts gesehen ist für jeden einzelnen Farbstoff eine Vormischkammer vorhanden, in der das Polyol mit dem Farbstoff vermischt wird. Jeder Vormischkammer ist eine Pumpe zugeordnet, die das entsprechend eingefärbte Polyol über eine farbspezifische Zuleitung in die Zusatzventileinheit pumpt. Zudem ist für jede Farbe eine Umwälzleitung und ein Umwälzventil vorgesehen, um nicht benötigtes Material wieder in die betreffende Vormischkammer zu leiten. Von der Zusatzventileinheit führt eine Leitung zu dem Polyol-Eingang der Mischkammer. Durch die Vorrichtung lässt sich somit ein Kunststoff mit unterschiedlichen Eigenschaften bereitstellen, nämlich im vorliegenden Fall in unterschiedlichen Farbtönen. Der Aufbau der in der DE 20 2005 020 930 U1 offenbarten Vorrichtung ist vergleichsweise aufwändig.

Die US 2007/0145641 A1 offenbart eine Vorrichtung zur Bereitstellung von gefärbtem Polyurethan, bei der in die Mischkammer Zuleitungen von einer Polyol-Quelle, von einer Isocyanat-Quelle und von zwei weiteren Quellen münden, die einerseits ein Gemisch aus Polyol und einem Treibmittel und andererseits ein Gemisch aus Polyol und einem Farbstoff bevorraten. Aufgrund der vielen Eingänge ist die Mischkammer komplex aufgebaut. Zudem lässt sich nur ein gefärbtes Polyol in die Mischkammer eintragen bzw. es ist von einem hohen Aufwand auszugehen, um vor der Verwendung eines anderes Farbstoffes die Vorrichtung von dem bisherigen Farbstoff zu befreien.

Der Erfindung liegt daher die Aufgabe zu Grunde, eine Vorrichtung zur Bereitstellung eines Kunststoffes zu schaffen, die einfach aufgebaut ist und sich ohne großen Aufwand betreiben lässt, auch wenn die Eigenschaften des Kunststoffes geändert werden.

Die der Erfindung zu Grunde liegende Aufgabe wird mit der Merkmalskombination gemäß Anspruch 1 gelöst. Ausführungsbeispiele der Erfindung können den Unteransprüchen zu Anspruch 1 entnommen werden.

Erfindungsgemäß ist vorgesehen, dass die Zusatzventileinheit ein Hauptrohr für die Zuführung der A-Komponente zum A-Eingang und ein erstes Zusatzinjektionsventil für die Zuführung des ersten Zusatzstoffes in das Hauptrohr aufweist. Das erste Zusatzinjektionsventil weist eine in das Hauptrohr mündende Ausgangsdüse auf, wobei eine Düsenspitze der Ausgangsdüse in einem mittleren Bereich des Strömungsquerschnitts des Hauptrohrs liegt. Der mittlere Bereich des Strömungsquerschnitts erfasst dabei alle Punkte des Strömungsquerschnitts, die auf einem inneren Abschnitt einer radialen Verbindungsgerade zwischen einem Querschnittsmittelpunkt und einer Innenwandung des Hauptrohrs liegen, wobei eine Länge des inneren Abschnitts 90 % der radialen Verbindungsgerade beträgt.

In einem Ausführungsbeispiel weist der Strömungsquerschnitt des Hauptrohres die Form eines Kreises auf, wobei die radiale Verbindungsgerade einem Radius R des Kreises entspricht. Erfindungsgemäß soll die Düsenspitze der Ausgangsdüse in einem mittleren Kreis liegen, dessen Radius Rₘ 90 % des Radius R enspricht. Alle Punkte innerhalb des mittleren Kreis bilden somit in diesem Ausführungsbeispiel den mittleren Bereich des Strömungsquerschnitts.

Ein Innendurchmesser des runden Hauptrohres kann 4 bis 10 mm betragen. Bei einem Innendurchmesser von beispielsweise 6 mm beträgt der Radius R die Hälfte, also 3 mm. Der Radius Rₘ würde dann 2,7 mm betragen. Erfindungsgemäß liegt dann die Düsenspitze innerhalb des mittleren Kreises mit dem Radius Rₘ = 2,7 mm.

Der Strömungsquerschnitt des Hauptrohres kann auch auch oval oder mehreckig sein, beispielsweise rechteckig. Der Querschnittsmittelpunkt eines rechteckigen Strömungsquerschnitts liegt im Schnittpunkt der Diagonalen des rechteckigen Strömungsquerschnitts. Der mittlere Bereich, in dem sich die Düsenspitze der Ausgangsdüse befinden soll, wird durch ein mittleres Rechteck begrenzt, dessen Querschnittsmittelpunkt mit dem Querschnittmittelpunkt des Strömungsquerschnitts zusammenfällt. Die Kantenlänge des mittleren Rechtecks beträgt dabei 90 % der Kantenlänge des rechteckigen Strömungsquerschnitts.

Durch die erfindungsgemäße Anordnung der Düsenspitze der Ausgangsdüse des ersten Zusatzinjektionsventils im mittleren Bereich des Strömungsquerschnitts ist es möglich, dass der erste Zusatzstoff in den Hauptstrom der durch das Hauptrohr fließenden A-Komponente eingetragen wird und entsprechend von derA-Komponente mitgeführt wird. Ein Kontakt des ersten Zusatzstoffes mit der Innenwandung des Hauptrohres kann somit verhindert werden. Dies hat den Vorteil, dass der erste Zusatzstoff sich nicht an der Innenwand des Hauptrohres absetzen kann, was zu Verschleppungen führen kann, wenn der Kunststoff nicht mehr den ersten Zusatzstoff beinhalten und damit seine Eigenschaft wechseln soll. Beispielsweise kann es sich bei dem ersten Zusatzstoff um einen ersten Farbstoff handeln, mit dem der ansonsten weiße Kunstoff eingefärbt werden soll.

Die A-Komponente stellt somit eine Umhüllende für den ersten Zusatzstoff dar, die einen direkten Kontakt von Zusatzstoff zu Innenwandung des Hauptrohres verhindert oder zumindest drastisch reduziert. Dies hat den Vorteil, dass ein Stopp des Zusatzstoffes schnell zu einem Kunststoff mit geänderten Eigenschaften führt. Der neue Kunststoff, also der Kunststoff ohne den zuvor verwendete Zusatzstoff, beinhaltet nicht oder nur im geringen Umfang in einer Übergangsphase von den zuvor verwendeten Zusatzstoff verunreinigt wird. Ist der Zusatzstoff eine Farbe, so treten Farbschlieren in dem neuen Kunstsoff, also in dem nun weißen oder transparenten Kunststoff, nur für kurze Zeit in einem kleinen Umfang auf.

Die Länge des inneren Abschnitts der in der Ebene des Strömungsquerschnitt verlaufenden Verbindungsgerade zwischen dem Querschnittsmittelpunkt und der Innenwandung des Hauptrohres kann 70 % oder auch nur 50 % der Länge der radialen Verbindungsgerade betragen. In dem Ausführungsbeispiel mit kreisrundem Strömungsquerschnitt würde der Radius Rₘ des inneren Kreis (inneren Bereiches) entsprechend 70 % (oder 50 %) des Radius R des Strömungsquerschnitt betragen.

In einem Ausführungsbeispiel ist das Hauptrohr geradlinig, zumindest ist es geradlinig in dem Bereich, in dem die Farbinjektonsventile in das Hauptrohr münden. Vorzugsweise verläuft das Hauptrohr im Wesentlichen vertikal, sodass eine Strömung der A-Komponente durch das Hauptrohr von oben nach unten möglich ist. In einem Ausführungsbeispiel verläuft das Hauptrohr exakt vertikal.

Damit die Zusatzventileinheit kompakt baut, kann eine Mittelachse des ersten Zusatzinjektionsventils im Wesentlichen senkrecht zu einer Mittelachse des Hauptrohrs angeordnet sein. Bei einem vertikal geführten Hauptrohr würde dies bedeuten, dass sich die Mittelachse in einer horizontalen Ebene erstreckt.

Die Zusatzventileinheit kann eine Vielzahl von Zusatzinjektionsventile aufweisen, beispielsweise vier bis zehn Zusatzinjektionsventile. In einem Ausführungsbeispiel sind sieben Zusatzinjektionsventile vorgesehen. Entsprechend kann die Zusatzventileinheit wenigstens ein zweites Zusatzinjektionsventil aufweisen, das der Zuführung eines zweiten Zusatzstoffes dient. Sind die Zusatzstoff jeweils Farbstoffe, so lässt sich mit der erfindungsgemäßen Vorrichtung ein unterschiedlich eingefärbter Kunststoff herstellen. Der Zusatzstoff oder die Zusatzstoffe können auch Additive, Katalysatoren etc. sein.

Eine Mittelachse des zweiten Zusatzinjektionsventils und auch Mittelachsen weiterer Zusatzinjektionsventile können im Wesentlichen senkrecht zur Mittelachse des Hauptrohres verlaufen. In einem Ausführungsbeispiel sind die Mittelachsen aller Zusatzinjektionsventile senkrecht zur Mittelachse des Hauptrohres.

Das erste Zusatzinjektionsventil und das zweite Zusatzinjektionsventil können in Längserstreckung des Hauptrohrs gesehen hintereinander angeordnet sein. Mit anderen Worten können die Zusatzinjektionsventile in Strömungsrichtung gesehen hintereinander geschaltet sein.

Die Mittelachse des ersten Zusatzinjektionsventils kann in Umfangrichtung des Hauptrohrs gesehen zu der Mittelachse des zweiten Zusatzinjektionsventils versetzt angeordnet sein. Damit ist es möglich, meherere Zusatzinjektionsventile auch bei einem vergleichsweise kurz bauenden Hauptrohr unterzubringen. Die Anordnung der Zusatzinjektionsventile kann so gewählt sein, dass sich alle Zusatzinjektionsventile nur in einem Umfangsbereich kleiner als 180° befinden (beispielsweise nur in einem Quadranten, was einen Winkelbereich von 90° bedeuten würde). Somit kann flexibel auf ein vorgegebenes begrenztes Platzangebot reagiert werden.

Das erste Zusatzinjektionsventil kann ein Nadelventil und eine Zahnradpumpe umfassen, wobei die Mittelachse des Zusatzinjektionsventils in diesem Fall mit der Mittelachse der Nadel des Nadelventils zusammenfallen soll. Das Nadelventil und die Zahnradpumpe können in einem gemeinsamen Gehäuse oder auch in getrennten Gehäusen untergebracht sein. Nadelventil und Zahnradpumpe sind miteinander fluidverbunden, sodass ein von der Zahnradpumpe erzeugter Druck im Nadelventil ansteht. Das erste Zusatzinjektionsventil kann auch als Exzenterschneckenpumpe ausgebildet sein. Die Bauelemente Pumpe und Ventil sind dabei in einer Bauform vereint.

Die obigen und auch die folgenden Ausführungen bezüglich der Ausgestaltung und Anordnung des ersten Zusatzinjektionsventil gelten sinngemäß auch für die anderen Zusatzinjektionsventile. Vorzugsweise weisen alle in der Zusatzventileinheit verwendeten Zusatzinjektionsventile den gleichen Aufbau auf.

Die Vorrichtung kann ein A-Dosierventil aufweisen, durch das der Zufluss der A-Komponente in die Mischkammer gesteuert bzw. geregelt wird. Das A-Dosierventil kann zwischen dem Hauptrohr und dem A-Eingang der Mischkammer angeordnet sein. In einem Ausführungsbeispiel erstreckt sich das Hauptrohr im Wesentlichen senkrecht zu einer Mittelachse des A-Dosierventils, wobei die A-Komponente durch einen seitlichen Einlass in das A-Dosierventil gelangt. Der Einlass und ein Auslass des A-Dosierventil können dabei im Wesentlichen senkrecht zueinander ausgerichtet sein. Dies bedeutet, dass innerhalb des A-Dosierventils die A-Komponente mit dem darin befindlichen ersten Zusatzstoff (bzw. einem anderen Zusatzstoff) eine Richtungsänderung von ungefähr 90° oder exakt 90° erfährt. Diese Richtungsänderung kann dazu führen, dass der im Hauptrohr von der A-Komponente abgeschirmte Zusatzstoff nun Kontakt mit der Innenwandung des A-Dosierventils hat und möglicherweise der Zusatzstoff sich in Bereichen des A-Dosierventils absetzen kann, die von der Hauptströmung durch das A-Dosierventil nur schlecht erfasst werden. Dies birgt die Gefahr von Ablagerungen und entsprechenden Verschleppungen oder Verunreinigungen bei einem Wechsel der Zusatzstoffe.

Um die unerwünschte Ablagerung eines der Zusatzstoffe in dem A-Dosierventil möglichst zu vermeiden, ist die Düsenspitze des ersten Zusatzinjektionsventils vorzugsweise zwischen dem Querschnittmittelpunkt des Hauptrohres und einer ausgangsseitigen Längshälfte des Hauptrohres angeordnet. Es hat sich gezeigt, dass durch eine derartige Anordnung der Düsenspitze der Zusatzstoff besser durch das A-Dosierventil transportiert wird, insbesondere in dem Teilstück des Ventils, in dem die 90°-Richtungsänderung vollzogen wird.

Ein Querschnitt der Ausgangsdüse des ersten Zusatzinjektionsventils kann kreisförmig, oval oder tropfenförmig ist. Die in den Strömungsquerschnitt ragende Ausgangsdüse stellt ein Strömungshindernis für die durch das Hauptrohr fließende A-Komponente dar. Durch einen strömungstechnisch optimierten Querschnitt der Ausgangsdüse im Hinblick auf einen möglichst kleinen Strömungswiderstand für die A-Komponente kommt es in der Nähe der Farbinjektion zu keinen scharfen Richtungsänderungen, die eine Durchmischung von A-Komponente und ersten Zusatzstofffördern würde. Eine gute Durchmischung im Hauptrohr ist jedoch, dies gilt auch losgelöst von der besonderen Auslegung des Querschnitts der Ausgangsdüse, erfindungsgemäß nicht gewünscht. Vielmehr soll der erste Zusatzstoff in den Hauptstrom der A-Komponente eingebettet sein und ein Kontakt zwischen Zusatzstoff und Innenwandung des Hauptrohres vermieden werden. Eine intensive Vermischung des ersten Zusatzstoffes mit der A-Komponente (und mit der B-Komponente) erfolgt erst in der Mischkammer. Bei der Mischkammer kann es sich auch um einen statischen Mischer handeln.

Die Ausgangsdüse kann unterschiedlich ausgeformt sein. In einem Ausführungsbeispiel ist sie geradlinig und erstreckt sich koaxial zur Mittelebene des ersten Zusatzinjektionsventil. Bei dem Ausführungsbeispiel, bei dem die Mittelebene des ersten Zusatzinjektionsventils senkrecht zur Mittelachse des Hauptrohres ausgerichtet ist, wird der erste Zusatzstoff senkrecht zur Hauptströmrichtung in die A-Komponente injiziert. Alternativ kann die Ausgangsdüse des ersten Zusatzinjektionsventils einen Winkel von in etwa 90° aufweisen, sodass die Düsenspitze in Längsrichtung des Hauptrohres bzw. in Hauptströmungsrichtung zeigt. In diesem Fall verlässt der erste Zusatzstoff die Düsenspitze in Richtung Hauptströmungsrichtung der A-Komponente. Auch kann zwischen der (geradlinigen) Ausgangsdüse und der Mittelachse des ersten Zusatzinjektionsventils ein Neigungswinkel zwischen 20 und 70° gegeben sein.

Eine weitere Aufgabe der Erfindung, ein Verfahren zum Ausdosieren eines Kunststoffes bereitzustellen, wird durch die Merkmalskombination nach Anspruch 13 gelöst. Ausführungsbeispiele des erfindungsgemäßen Verfahren sind die Unteransprüchen von Anspruch 13 zu entnehmen.

Erfindungsgemäß ist vorgesehen, dass beim Verfahren zum Ausdosieren die hier beschriebene Vorrichtung nach einem der Ansprüche 1 bis 12, verwendet wird wobei das erste Zusatzinjektionsventil nach einer erfolgten Ausdosierung des ersten Zusatzstoffes so angesteuert wird, dass ein kleiner Teil der A-Komponente in die Ausgangsdüse des ersten Zusatzinjektionsventil gesaugt wird. Beim nächsten Ausdosieren wird dann dieser angesaugte Teil der A-Komponente wieder in das Hauptrohr abgegeben.

In einem Ausführungsbeispiel des erfindungsgemäßen Verfahrens, bei dem eine Vorrichtung mit mehreren Zusatzinjektionsventilen verwendet wird, wird das erste Zusatzinjektionsventil in Strömungsrichtung des Hauptrohres gesehen vor dem zweiten Zusatzinjektionsventil angeordnet, wobei der erste als Farbstoff ausgebildete Zusatzstoff heller als der zweite als Fabrstoff ausgebildeter Zusatzstoff ist. Bei mehreren Zusatzinjektionsventilen können diese also der Reihe nach in Strömungsrichtung entsprechend der Helligkeit des injizierten Zusatzstoffes (Farbstoffes) angeordnet sein. Das Zusatzinjektionsventil mit dem hellsten Zusatzstoff weist dann zum A-Dosierventil den größten Abstand auf. Für die Bestimmung der Helligkeit eines Zusatzstoffes kann das RGB-Modell zu Grunde gelegt werden. Das RGB-Modell ist dabei ein additives Farbmodell, bei welchem der Farbton an Helligkeit gewinnt, je mehr Farben ineinander gemischt werden.

Zwischen dem Ausdosieren durch das erste Zusatzinjektionsventil und dem Ausdosieren durch das zweite Zusatzinjektionsventil kann zur Spülung, unabhängig davon, ob es sich bei den Zusatzstoffen um Farbstoffe handelt, wie folgt vorgegangen werden: Zunächst wird das Ausdosieren durch das erste Zusatzinjektionsventil gestoppt, wobei die A-Komponente weiter durch das Hauptrohr strömt. Das erste Zusatzinjektionsventil wird dann so angesteuert, dass es einen Teil des ersten Zusatzstoffes zurücksaugt und ggf. auch einen Teil der A-Komponente aus dem Hauptrohr saugt. Danach wird das erste Zusatzinjektionsventil geschlossen.

Es folgt nun das Ausdosieren durch das zweite Zusatzinjektionsventil. Das Ausdosieren des zweiten Zusatzstoffes wird gestartet und solange fortgesetzt, bis die Konzentration des ersten Zusatzstoffes im A-Dosierventil im Wesentlichen null ist (Verhältnis des ersten Zusatzstoffes zu A-Komponente beispielsweise kleiner als 0,1 %). Danach wird die Mischkammer mit einem Reinigungmittel gespült, wodurch letzte Farbreste des ersten Zusatzstoffes aus der Mischkammer entfernt werden. Nach dem Spülen wird das Ausdosieren der zweiten Farbe erneut gestartet.

Eine bevorzugte Verwendung der Vorrichtung und des Verfahrens ist die Bereistellung von unterscheidlich gefärbtem Polyurethan, wobei die A-Komponente ein Polyol und die B-Komponente ein Isocyanat sind. Die Viskosität des Polyols kann 50 bis 1.000.000 mPas betragen und liegt vorzugsweise in einem Bereich zwischen 1.000 und 100.000 mPas. Die Viskosität des Isocyanats kann 10 bis 100.000, bevorzugt 50 bis 5.000 mPas betragen. Die Komponenten A und B können auch andere Stoffe sein, zum Beispiel Silikon, Epoxi, MS-Polymere.

Die Viskosität des ersten Zusatzstoffes (und auch der anderen Zusatzstoffe) kann 10 bis 100.000 mPas betragen. In einem Ausführungsbeispiel liegen die Viskositäten des ersten Zusatzstoffes und des zweiten Zusatzstoffes jeweils zwischen 200 und 10.000 mPas.

Eine Gesamtaustragsmenge an einem Ausgang der Mischkamnmer kann 0,2 bis 150 g/s, bevorzugt 3 bis 30 g/s betragen. Das Mischungsverhältnis A-Komponente zu B-Komponente kann 10:1 bis 1:10 betragen. Bei der Herstellung von Poyurethan liegt das Mischungsverhältnis Poyol zu Isocyanat bevorzugt zwischen 1:1 und 10:1. Der Anteil des jeweils eingesetzten Zusatzstoffes an der Gesamtaustragsmenge kann 0,5 bis 20 % und bevorzugt 1 bis 5 % betragen.

Es sei darauf hingewiesen, dass zwei oder mehr Zusatzinjektionsventile gleichzeitig ihren jeweiligen Zusatzstoff in das Hauptrohr ausdosieren können. Sind die Zusatzstoffe Farbstoffe, so wird der Kunststoff durch einen gemischten Farbstoff gefärbt. Somit ist es möglich, bei beispielsweise fünf Zusatzinjektionsventilen mehr als fünf Farbtöne für den Kunststoff bereitzustellen.

Anhand der in den Figuren dargestellten Ausführungsbeispiele wird die Erfindung näher erläutert. Es zeigen:
- Figur 1: ein Flussdiagramm für eine Vorrichtung zum Bereitstellen eines Zweikomponenten-Kunststoffes mit unterschiedlichen Farben;
- Figur 2: ein Dosierventil für eine A-Komponente sowie ein Zusatzventileinheit;
- Figur 3: schematisch verschieden ausgebildete Ausgangsdüsen;
- Figur 4: einen Schnitt entlang der Linie IV-IV der Figur 3; und
- Figur 5: einen Schnitt entlang der Linie V-V der Figur 3 in unterschiedlichen Ausführungen (Figur 5A, 5B und 5C).

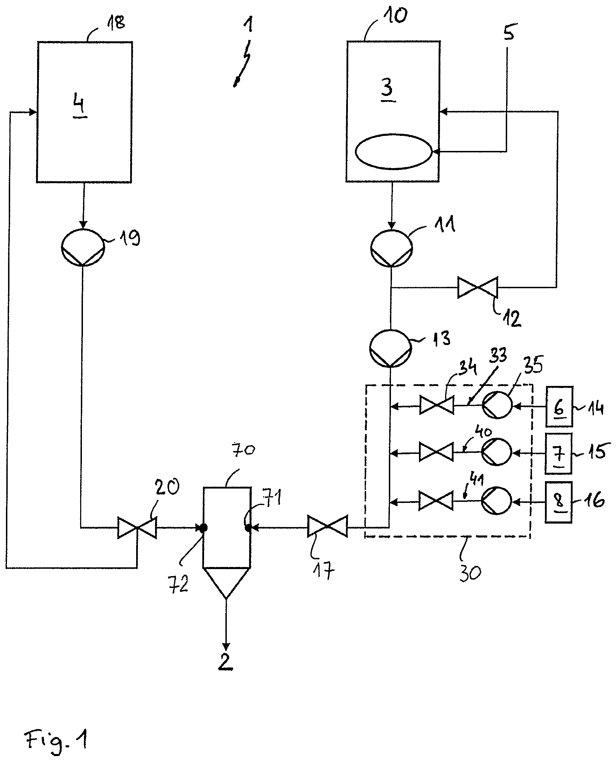

Figur 1 zeigt eine Vorrichtung, die in ihrer Gesamtheit mit 1 bezeichnet wird. Mit der Vorrichtung 1 lässt sich ein Kunststoff 2 herstellen und ausdosieren. Bei dem Kunststoff 2 handelt es sich um ein Mehrkomponenten-Kunststoff, der sich aus einer A-Komponente 3 und einer B-Komponente 4 zusammensetzt. Im vorliegenden Fall soll der Mehrkomponenten-Kunststoff Polyurethan sein, wobei die A-Komponente transparentes Polyol ist. Die B-Komponente ist Isocyanat. Anstelle des transparenten Polyols kann auch weißes Polyol verwendet werden.

Die A-Komponente bzw. das Polyol 3 ist in einer als Druckbehälter ausgebildeten A-Quelle 10 bevorratet. Der Druckbehälter 10 ist mit Druckluft 5 beladen. Mithilfe einer Vorzirkulationspumpe 11 wird die A-Komponente 3 im Kreis gefördert. Um den Druck des Vorzirkulationskreislaufes zu regeln, ist ein Druckregelventil 12 in den Kreislauf eingebaut. Die Vorzirkulationspumpe 11 arbeitet vorzugsweise durchgehend mit einer konstanten Drehzahl.

Eine A-Dosierpumpe 13 wird über den Druck des Vorzirkulationskreislaufes mit der A-Komponente 3 versorgt. Die A-Dosierpumpe 13 fördert die A-Komponente in eine Zusatzventileinheit 30, die in der Darstellung der Figur 1 durch ein gestricheltes Rechteck begrenzt ist. Durch die Zusatzventileinheit 30 wird der A-Komponente 3 ein erster Zusatzstoff 6, ein zweiter Zusatzstoff 7 oder ein dritter Zusatzstoff 8 zugeführt. Die Zusatzstoffe 6 bis 8 stehen exemplarisch für eine Vielzahl von unterschiedlichen Zusatzstoffen. Beispielsweise können sieben verschiedene Zusatzstoffe vorgesehen sein.

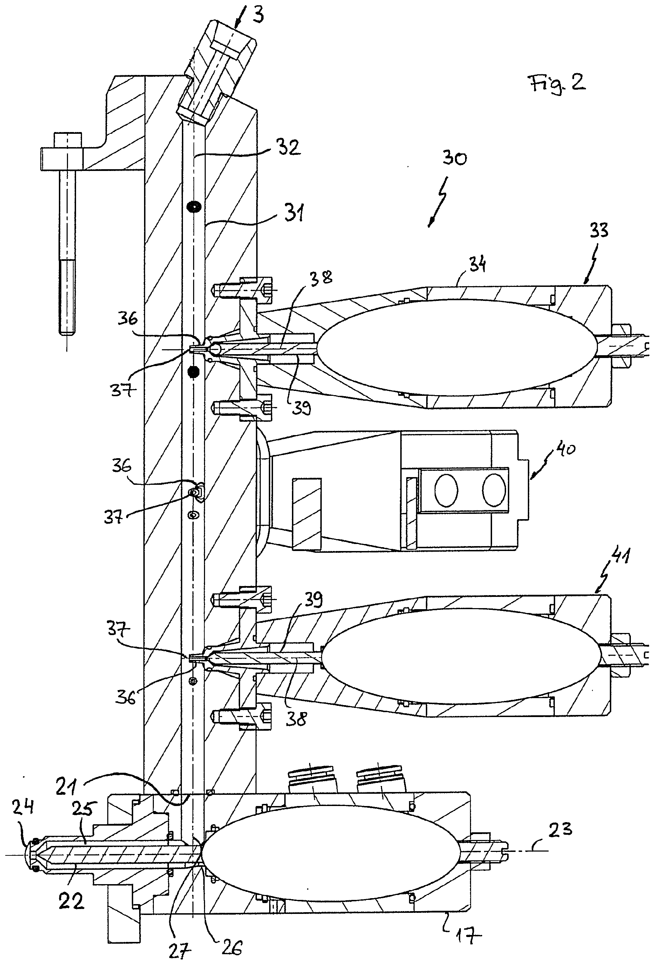

Bei den Zusatzstoffen kann es sich um unterschiedliche Farbstoffe handeln. Es ist möglich, dass die Zusatzventileinheit 30 den ersten Zusatzstoff (Farbstoff) 6 und den zweiten Zusatzstoff (Farbstoff) 7 gleichzeitig der A-Komponente 3 zusetzt, sodass der Kunststoff 2 auch mit entsprechenden Mischfarben eingefärbt sein kann. Der erste Zusatzstoff 6 stammt aus einer ersten Zusatzquelle 14, die beispielsweise ein Behälter sein kann. Der zweite Zusatzstoff 7 und der dritte Zusatzstoff 8 stammen aus einer zweiten Zusatzquelle 15 bzw. aus einer dritten Zusatzquelle 16. Ein Ausführungsbeispiel für die Zusatzventileinheit 30 ist Figur 2 zu entnehmen, worauf noch später näher eingegangen wird.

In Strömungsrichtung gesehen nach der Zusatzventileinheit 30 ist ein Dosierventil 17 für die A-Komponente 3 (kurz A-Dosierventil 17) vorgesehen, durch das das Gemisch aus A-Komponente 3 und Zusatzstoff in eine Mischkammer 70 ausgegeben wird. Das A-Dosierventil 17 soll unmittelbar vor einem A-Eingang 71 der Mischkammer 70 angeordnet sein.

Die Mischkammer 70 weist einen weiteren Eingang 72 auf, der für die B-Komponente 4 vorgesehen ist (B-Eingang). Die B-Komponente 4 stammt aus einer B-Quelle 18 (hier ebenfalls als Behälter ausgeführt) und wird über eine B-Dosierpumpe 19 und über ein B-Dosierventil 20 in die Mischkammer 70 geleitet. In der Mischkammer 70 werden die B-Komponente 4 und die A-Komponente 3 einschließlich einer der Zusatzstoffe 6, 7, 8 oder einschließlich einer Mischung der Zusatzstoffe 6, 7, 8 intensiv miteinander zu dem farbigen Mehrkomponenten-Kunststoff 2 vermischt. In Abhängigkeit des Zusatzstoffes, der in der Zusatzventileinheit 30 der A-Komponente 3 beigegeben wird, weist der Kunststoff 2 unterschiedliche Eigenschaften auf. Entsprechend lässt sich durch die Vorrichtung 1 ein unterschiedlich gefärbter Kunststoff 2 bereitstellen, wenn die Zusatzstoffe als Farbstoffe ausgebildet sind.

Figur 2 zeigt ein Ausführungsbeispiel für die Zusatzventileinheit 30. Die Zusatzventileinheit 30 umfasst ein Hauptrohr 31, welches einen kreisrunden Strömungsquerschnitt aufweist. Das Hauptrohr 31 mündet in einen seitlichen Einlass 21 des A-Dosierventils 17. Das A-Dosierventil 17 ist als Nadelventil mit einer Nadel 22 ausgebildet, die entlang einer Mittelachse 23 des A-Dosierventils 17 verschieblich angeordnet ist. Durch die Nadel 22 lässt sich ein Ausgang 24 des A-Dosierventils 17 schließen und öffnen. Der Ausgang 24 kann ohne Zwischenschaltung von Leitungen oder anderen Bauteilen (Pumpe, Ventil etc.) mit dem A-Eingang Mischkammer 70 verbunden sein. Eine Mittelachse 32 des Hauptrohrs 31 und eine Mittelachse 27 des seitlichen Einlasses 21 fallen zusammen. Die Mittelachse 32 des Hauptrohrs 31 und die Mittelachse 23 des A-Dosierventils 17 sind zueinander senkrecht ausgerichtet.

Die Nadel 22 ist in einer zylindrischen Ventilkammer 25 angeordnet, die mit dem seitlichen Einlass 21 fluidverbunden ist. Zwischen Nadel 22 und der Innenwandung der Ventilkammer 25 bildet sich ein ringförmiger oder hohlzylindrischer Hohlraum aus, durch den die A-Komponente 3 mit dem ersten Zusatzstoff 6 fließt. Es hat sich herausgestellt, dass an einem einlassseitigen unteren Ende 26 der Ventilkammer 25, gegenüber der Mündungsstelle des seitlichen Einlasses 21 gelegen, das A-Dosierventil vergleichsweise schwach durchströmt wird. An dem unteren Ende 26 können sich daher vorwiegend Farbreste in der A-Komponente 3 sammeln und ablagern.

Von oben wird die A-Komponente 3 in das vertikal ausgerichtete Hauptrohr 31 zugeführt. Die A-Komponente 3 strömt dabei durch das Hauptrohr 31 und gelangt über den Einlass 21 in das A-Dosierventil 17. Über die axiale Stellung der Nadel 22 lässt sich der Volumenstrom der A-Komponente 3 durch den Auslass 24 in die Mischkammer 70 regeln.

Der Aufbau eines Nadelventils ist grundsätzlich bekannt. Details oder Bauteile des Nadelventils, die durch ein weißes Oval überdeckt werden, sind für die vorliegende Erfindung nicht von besonderer Relevanz. Dies gilt sinngemäß auch für andere Nadelventile, die in Figur 2 dargestellt sind. Auch dort werden für die Erfindung nicht relevante Details durch weiße Ovale abgedeckt.

Wie Figur 2 weiter zu entnehmen ist, münden in das Hauptrohr 31 ein erstes Zusatzinjektionsventil 33, das ein Nadelventil 34 und eine in der Figur 2 nicht dargestellte Zahnradpumpe umfasst. Das erste Zusatzinjektionsventil 33 ist schematisch auch in Figur 1 dargestellt. Die Zahnradpumpe ist in Figur 1 mit dem Bezugszeichen 35 versehen.

Das erste Zusatzinjektionsventil 33 bzw. das Nadelventil 34 des Zusatzinjektionsventils 33 weist eine Ausgangsdüse 36 mit einer Düsenspitze 37 auf. Mit der Ausgangsdüse 36 ragt das Zusatzinjektionsventil 33 in das Hauptrohr 31 hinein. Mit dem ersten Zusatzinjektionsventil 33 lässt sich somit der erste Zusatzstoff 6 (siehe Figur 1) in das Hauptrohr 31 einbringen. Der Druck, mit dem der erste Zusatzstoff 6 in den Strom der A-Komponente eingebracht wird, ist dabei so bemessen, dass der erste Zusatzstoff 6 von dem Strom der A-Komponente umhüllt wird und mitgeführt wird, ohne dass es dabei zu einer intensiven Vermischung von der A-Komponente 3 und dem ersten Zusatzstoff 6 kommt.

Ohne an diese Theorie gebunden zu sein, bildet sich zwischen der A-Komponente 3 und dem injizierten Zusatzstoff 6 eine trennende Grenzschicht aus, die verhindert, dass der erste Zusatzstoff 6 Kontakt zu der Innenwandung des vertikalen Hauptrohres 31 hat. Damit die A-Komponente 3 die oben beschriebene umhüllende Funktion ausüben kann, ist es erfindungsgemäß vorgesehen, dass die Düsenspitze 37 der Ausgangsdüse 36 sich in einem mittleren Bereich des Strömungsquerschnitt des Hauptrohres 31 befindet. Dann kann es zu der vollständigen Umhüllung des ersten Zusatzstoffes 6 innerhalb des Hauptrohres kommen. Würde die Ausgangsdüse 36 direkt an der Innenwandung des Hauptrohres enden, bestünde die Gefahr, dass der erste Zusatzstoff 6 die Innenwandung benetzt und an dieser anhaftet.

Eine Mittelachse 38 des Nadelventils 34, welche die Mittelachse des ersten Zusatzinjektionsventil 33 darstellen soll, steht senkrecht zur Mittelachse 32 des Hauptrohres. Eine Nadel 39 ist entlang der Mittelachse 38 verschieblich angeordnet, durch die der Durchfluss durch das Nadelventil 34 eingestellt werden kann.

Neben dem ersten Zusatzinjektionsventil 33 sind in Figur 2 ein zweites Zusatzinjektionsventil 40 und ein drittes Zusatzinjektionsventil 41 zu erkennen, die wie das erste Zusatzinjektionsventil 33 aufgebaut sind. Aufgrund des gleichen Aufbaus werden Merkmale oder Bauteile der Zusatzinjektionsventile 40, 41, die zu den Merkmalen oder Bauteilen des ersten Zusatzinjektionsventils 33 identisch sind, mit gleichen Bezugszeichen versehen. Insbesondere weisen diese Zusatzinjektionsventile 40, 41 jeweils auch eine Ausgangsdüse 36 mit einer Düsenspitze 37 auf. Sowohl die Ausgangsdüse 36 des zweiten Zusatzinjektionsventils 40 als auch die Ausgangsdüse 36 des dritten Zusatzinjektionsventils 41 ragen in das Hauptrohr 31. Das zweite Zusatzinjektionsventil 40 dient zum Einbringen des zweiten Zusatzstoffes 7 (siehe auch Figur 1) in den Strom der A-Komponente 3. Durch das dritte Zusatzinjektionsventil 41 lässt sich der dritte Zusatzstoff 8 in das Hauptrohr 31 einspritzen.

Während die Mittelachse 38 des ersten Zusatzinjektionsventils 33 und die Mittelachse 38 des dritten Zusatzinjektionsventils 41 sich in der Zeichnungsebene befinden, ist das zweite Zusatzinjektionsventil 40 zur Zeichnungsebene geneigt.

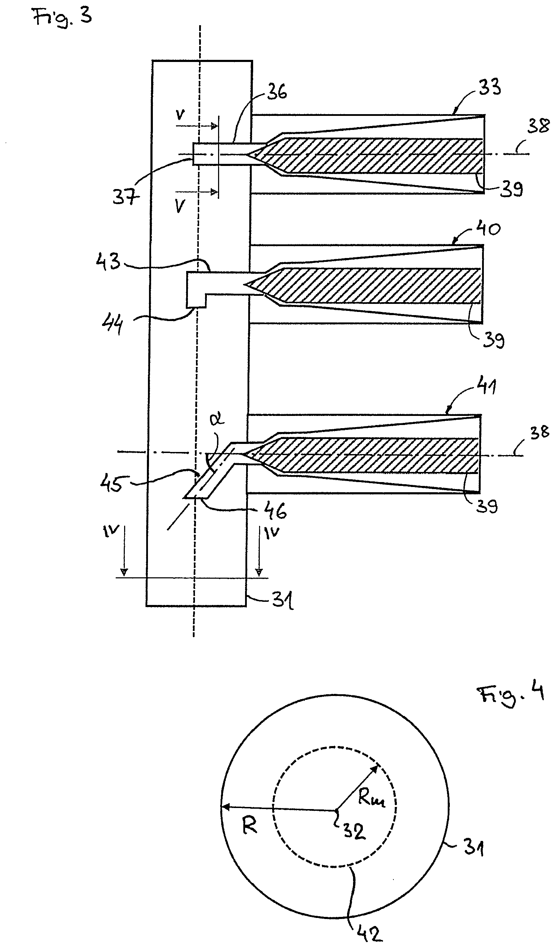

Figur 3 zeigt schematisch und ausschnittsweise das Hauptrohr 31 und die Zusatzinjektionsventile 33, 40 und 41. Die Ausgangdüse 36 des ersten Zusatzinjektionsventil 33 ist geradlinig ausgeführt und erstreckt sich entlang der Mittelachse 38 des ersten Zusatzinjektionsventils 33. Zu erkennen ist, dass die Düsenspitze 37 in unmittelbarer Nähe der Mittelachse 32 des Hauptrohres 31 liegt.

Aus Figur 4, welche einen Schnitt entlang der Linie IV-IV in Figur 3 zeigt, geht der kreisförmige Strömungsquerschnitt des Hauptrohres 31 hervor. Der Strömungsquerschnitt wird durch einen Radius R definiert, der als Verbindungsgerade zwischen einem Querschnittsmittelpunkt und einer Innenwandung des Hauptrohres 31 aufgefasst werden kann. Der Querschnittsmittelpunkt liegt dabei auf der Mittelachse 32. Die Düsenspitze 37 liegt in dem mittleren Bereich, der durch den gestrichelten Kreises 42 mit einem Radius Rₘ begrenzt ist. Erfindungsgemäß gilt, dass das Verhältnis Rₘ/R = 0,9 ist. Punkte, die außerhalb des Kreises 42 liegen, gehören erfindungsgemäß nicht zu dem mittleren Bereich. In einem Ausführungsbeispiel beträgt das Verhältnis Rₘ/R nur 0,5, was in etwa den Verhältnissen in Figur 4 entspricht.

Das zweite Zusatzinjektionsventil 40 weist gegenüber dem ersten Zusatzinjektionsventil 33 eine modifizierte Ausgangsdüse 43 auf. Die Düsenspitze dieser modifizierten Ausgangsdüse 43 ist mit 44 bezeichnet und liegt wie auch die Düsenspitze 37 des ersten Zusatzinjektionsventils 33 in dem mittleren Bereich des Strömungsquerschnitts des Hauptrohres 31. Die Ausgangsdüse 43 weist einen 90°-Winkel auf, sodass der zweite Zusatzstoff 7, der durch das zweite Zusatzinjektionsventil 40 in das Hauptrohr 31 eingebracht wird, in Strömungsrichtung des Hauptrohres 31 durch die Düsenspitze 44 tritt. Das dritte Zusatzinjektionsventil 41 weist eine zur Mittelachse 38 geneigte Ausgangsdüse 45 auf. Der Neigungswinkel zwischen der Ausgangsdüse 45 und der Mittelachse 38 ist in Figur 3 mit α bezeichnet und beträgt im dargestellten Ausführungsbeispiel ca. 40° bis 50°. Auch hier liegt ein Düsenspitze 46 der geneigten Ausgangsdüse 45 in dem mittleren Bereich des Strömungsquerschnitts des Hauptrohres 31.

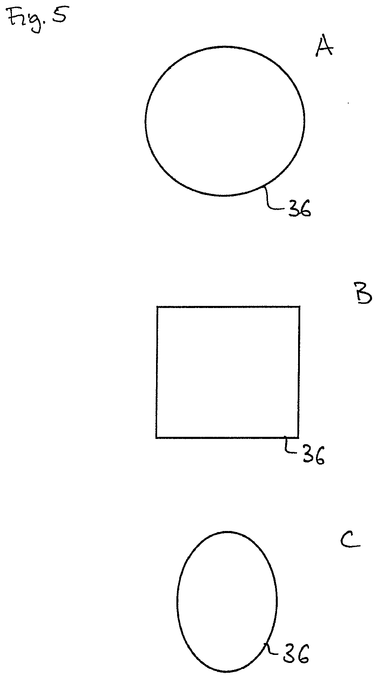

Figur 5 zeigt verschiedene Querschnitte der Ausgangsdüse 36 des ersten Zusatzinjektionsventils 33. Der Querschnitt der Ausgangsdüse 36 entspricht dem Schnitt entlang der Linie V-V in Figur 3. In Figur 5A ist ein runder Querschnitt der Ausgangsdüse 36 gezeigt. Figur 5B zeigt einen rechteckigen Querschnitt der Ausgangsdüse 36. Der Querschnitt der Ausgangsdüse 37 kann zur Erlangung eines kleinen Strömungswiderstands, der durch die in das Hauptrohr 31 ragende Ausgangsdüse 36 verursacht wird, optimiert sein, beispielsweise durch einen ovalen Querschnitt der Ausgangsdüse 36 (siehe Figur 5C) oder durch eine Tropfenform.

Die Figuren 3 bis 5 zeigen unterschiedliche Ausführungen für die Ausgangsdüse der Zusatzinjektionsventile 33, 40, 41. Es versteht sich, dass beispielsweise alle Zusatzinjektionsventile 33, 40, 41 einen Aufbau haben können, wie er exemplarisch für das erste Zusatzinjektionsventil 33 in Figur 3 dargestellt ist. Auch können alle Zusatzinjektionsventile 30, 40, 41 oder eine Untergruppe davon eine abgewinkelte Ausgangsdüse 43 oder eine geneigte Ausgangsdüse 45 aufweisen.

Anhand der Figuren 1 und 2 soll ein so genannter Farbwechsel in der Vorrichtung 1 beschrieben werden. Es wird dabei angenommen, dass bei einem konstanten Strom der A-Komponente durch das Hauptrohr 31 das erste Zusatzinjektionsventil 33 den ersten Zusatzstoff (Farbstoff) 6 in das Hauptrohr 31 injiziert. Die A-Komponente 3 umhüllt dabei den aus der Ausgangsdüse 36 tretenden ersten Zusatzstoff 6. Die A-Komponente mit dem ersten Zusatzstoff 6 durchströmt dabei auch das A-Dosierventil 17. In der Mischkammer 70 kommt es zu einer Vermischung der A-Komponente 3 mit dem ersten Farbstoff 6 und der B-Komponente 4. Es wird ein Kunstsoff 2 ausdosiert, der mit dem ersten Farbstoff 6 eingefärbt ist.

Nach dem Ausdosieren des mit dem ersten Farbstoff 6 gefärbten Kunststoffes 2 soll nun ein Kunststoff 2 ausdosiert werden, der mit dem zweiten Zusatzstoff (Farbstoff) 7 gefärbt ist. Dazu wird das erste Zusatzinjektionsventil 33 geschlossen oder alternativ so betrieben, dass die Zahnradpumpe 35 rückwärts läuft und den bereits unmittelbar zuvor ausdosierten Farbstoffstoff 6 und/oder einen kleinen Teil der A-Komponente in das Nadelventil 34 wieder ansaugt. Nach dem Schließen oder Rückwärtslauf des ersten Zusatzinjektionsventils 33 wird das zweite Zusatzinjektionsventil 40 geöffnet, sodass nun der zweite Farbsoff 7 in den Strom der A-Komponente 3 eingegeben wird. Aufgrund der erfindungsgemäßen Anordnung der Düsenspitze 37 gibt es weder im Hauptrohr 31 noch in der Ventilkammer 25 des A-Dosierventils 17 Bereiche, in der sich der zuvor ausdosierte erste Farbstoff 6 ansammelt oder ablagert. Insbesondere dann, wenn die Düsenspitze 37 in der Hälfte des mittleren Bereichs liegen, die dem Ausgang 24 des A-Dosierventils 17 zugewandt ist (in der Darstellung der Figur 2 ist dies die Hälfte des mittleren Bereichs links von der Mittelachse 32), befinden sich praktisch keine nennenswerte Farbreste in dem unteren Ende 26 der Ventilkammer 25, die einen Farbwechsel erschweren oder verzögern würden. Nach vergleichsweiser kurzer Zeit nach dem Beginn des Ausdosierens des zweiten Farbstoffes 7 weist der Kunststoff 2 keine Schlieren oder Verunreinigungen auf, der durch die Farbreste des ersten Farbstoffes 6 verursacht werden. Somit lässt sich durch die erfindungsgemäße Vorrichtung 1 ein Farbwechsel zwischen verschiedenen Farbstoffen 6, 7, 8 ohne großen Aufwand realisieren. Die Zeitspanne, in der bedingt durch den Farbwechsel der Kunststoff 2 Verunreinigungen zeigt, kann somit klein gehalten. Auch lässt sich dadurch der Aufwand für eine etwaige Spülung während eines Farbwechsels gering halten.

### Bezugszeichenliste

- 1: Vorrichtung
- 2: Kunststoff
- 3: A-Komponente
- 4: B-Komponente
- 5: Luft
- 6: erster Zusatzstoff / erster Farbstoff
- 7: zweiter Zusatzstoff / zweiter Farbstoff
- 8: dritter Zusatzstoff / dritter Farbstoff

- 10: A-Quelle / Druckbehälter
- 11: Vorzirkulationspumpe
- 12: Druckregelventil
- 13: A-Dosierpumpe
- 14: erste Zusatzquelle
- 15: zweite Zusatzquelle
- 16: dritte Zusatzquelle
- 17: A-Dosierventil
- 18: B-Quelle
- 19: B-Dosierpumpe
- 20: B-Dosierventil
- 21: seitlicher Einlass
- 22: Nadel
- 23: Mittelachse
- 24: Ausgang
- 25: Ventilkammer
- 26: unteres Ende
- 27: Mittelachse

- 30: Zusatzventileinheit
- 31: Hauptrohr
- 32: Mittelachse
- 33: erstes Zusatzinjektionsventil
- 34: Nadelventil
- 35: Zahnradpumpe
- 36: Ausgangsdüse
- 37: Düsenspitze
- 38: Mittelachse
- 39: Nadel
- 40: zweites Zusatzinjektionsventil
- 41: drittes Zusatzinjektionsventil
- 42: Kreis
- 43: Ausgangsdüse
- 44: Düsenspitze
- 45: Ausgangsdüse
- 46: Düsenspitze

- 70: Mischkammer
- 71: A-Eingang
- 72: B-Eingang

## Patentansprüche

1. Vorrichtung (1) zur Bereitstellung eines Kunststoffes (2), der aus einer A-Komponente (3) und einer B-Komponente (4) sowie optional aus einem ersten Zusatzstoff (6) gebildet wird, wobei die Vorrichtung (1) aufweist:
• eine Mischkammer (70), in der die A-Komponente (3) und die B-Komponente (4) zur Bildung des Kunststoffes (2) vermischt werden und aus dem der Kunststoff (2) ausdosierbar ist,
• eine Zusatzventileinheit (30), die strömungstechnisch vor einem A-Eingang (71) der Mischkammer (70) für die A-Komponente (3) geschaltet ist,
**dadurch gekennzeichnet, dass** die Zusatzventileinheit (30) ein Hauptrohr (31) für die Zuführung der A-Komponente (3) zum A-Eingang (71) und ein erstes Zusatzinjektionsventil (33) für die Zuführung des ersten Zusatzstoffes (6) in das Hauptrohr (31) aufweist, wobei das erste Zusatzinjektionsventil (33) eine in das Hauptrohr (31) mündende Ausgangsdüse (36) aufweist, wobei eine Düsenspitze (37) der Ausgangsdüse (36) in einem mittleren Bereich des Strömungsquerschnitts des Hauptrohrs (31) liegt, wobei in den mittleren Bereich die Punkte des Strömungsquerschnitts fallen, die auf einem inneren Abschnitt einer radialen Verbindungsgerade zwischen einem Querschnittsmittelpunkt und einer Innenwandung des Hauptrohrs (31) liegen, wobei eine Länge des inneren Abschnitts 90 % der radialen Verbindungsgerade beträgt.

2. Vorrichtung (1) nach Anspruch 1, **dadurch gekennzeichnet, dass** der Strömungsquerschnitt des Hauptrohres (31) die Form eines Kreises aufweist, wobei die radiale Verbindungsgerade einem Radius (R) des Kreises entspricht.

3. Vorrichtung (1) nach Anspruch 1 oder 2, **dadurch gekennzeichnet, dass** das Hauptrohr (31) im Wesentlichen vertikal verläuft.

4. Vorrichtung (1) nach einem der Ansprüche 1 bis 3, **dadurch gekennzeichnet, dass** eine Mittelachse (38) des ersten Zusatzinjektionsventils (33) im Wesentlichen senkrecht zu einer Mittelachse (32) des Hauptrohrs (31) angeordnet ist.

5. Vorrichtung (1) nach einem der Ansprüche 1 bis 4, **dadurch gekennzeichnet, dass** wenigstens ein zweites Zusatzinjektionsventil (40) für die Zuführung eines zweiten Zusatzstoffes vorgesehen ist, wobei das zweite Zusatzinjektionsventil (40) eine in das Hauptrohr (31) mündende Ausgangsdüse (36) aufweist, dessen Düsenspitze (37) in dem mittleren Bereich des Strömungsquerschnitts des Hauptrohrs (31) liegt.

6. Vorrichtung (1) nach Anspruch 5, **dadurch gekennzeichnet, dass** das erste Zusatzinjektionsventil (33) und das zweite Zusatzinjektionsventil (40) in Längserstreckung des Hauptrohrs (31) gesehen hintereinander angeordnet sind.

7. Vorrichtung (1) nach Anspruch 5 oder 6, **dadurch gekennzeichnet, dass** die Mittelachse (38) des ersten Zusatzinjektionsventils (33) in Umfangrichtung des Hauptrohrs (31) gesehen zu einer Mittelachse (38) des zweiten Zusatzinjektionsventils (40) versetzt angeordnet ist.

8. Vorrichtung (1) nach einem der Ansprüche 1 bis 7, **dadurch gekennzeichnet, dass** ein A-Dosierventil vorgesehen ist, wobei sich das Hauptrohr (31) im Wesentlichen senkrecht zu einer Mittelachse (23) des A-Dosierventils (17) erstreckt, und wobei die A-Komponente (3) durch einen seitlichen Einlass (21) in das A-Dosierventil (17) gelangt.

9. Vorrichtung (1) nach Anspruch 8, **dadurch gekennzeichnet, dass** das A-Dosierventil (17) einen Ausgang (24) aufweist, wobei die Düsenspitze (37) des ersten Zusatzinjektionsventils (33) zwischen dem Querschnittmittelpunkt und einer ausgangsseitigen Längshälfte des Hauptrohres (31) liegt.

10. Vorrichtung (1) nach einem der Ansprüche 1 bis 9, **dadurch gekennzeichnet, dass** ein Querschnitt der Ausgangsdüse (36) des ersten Zusatzinjektionsventils (33) kreisförmig, oval oder tropfenförmig ist.

11. Vorrichtung (1) nach einem der Ansprüche 1 bis 10, **dadurch gekennzeichnet, dass** die Ausgangsdüse (36) des ersten Zusatzinjektionsventils (33) einen Winkel von etwa 90°aufweist und die Düsenspitze (37) in Längsrichtung des Hauptrohres (31) zeigt.

12. Vorrichtung (1) nach einem der Ansprüche 1 bis 10, **dadurch gekennzeichnet, dass** zwischen der Ausgangsdüse (36) und einer Mittelachse (38) des ersten Zusatzinjektionsventils (33) ein Neigungswinkel zwischen 20 und 70° gegeben ist.

13. Verfahren zum Ausdosieren eines Kunststoffes (2) mit einer Vorrichtung (1) nach einem der Ansprüche 1 bis 12, **dadurch gekennzeichnet, dass** das erste Zusatzinjektionsventil (33) nach einer erfolgten Ausdosierung so angesteuert wird, dass ein kleiner Teil der A-Komponente (3) in die Ausgangsdüse (36) des ersten Zusatzinjektionsventils (33) gesaugt wird.

14. Verfahren nach Anspruch 13 mit der Vorrichtung (1) nach einem der Ansprüche 5 bis 7, **dadurch gekennzeichnet, dass** das erste Zusatzinjektionsventil (33) in Strömungsrichtung des Hauptrohres (31) gesehen vor dem zweiten Zusatzinjektionsventil (40) angeordnet ist, wobei der erste Zusatzstoff (6) als erster Farbstoff (6) ausgebildet ist und heller als der zweite Zusatzstoff (7) ist, der als zweiter Farbstoff (7) ausgebildet ist.

15. Verfahren nach Anspruch 14, **dadurch gekennzeichnet, dass** zwischen dem Ausdosieren durch das erste Zusatzinjektionsventil (33) und dem Ausdosieren durch das zweite Zusatzinjektionsventil (40) zur Spülung folgende Schritte eingeleitet werden:
- das Ausdosieren durch das erste Zusatzinjektionsventil (33) wird gestoppt, wobei die A-Komponente (3) weiter strömt;
- das erste Zusatzinjektionsventil (40) wird so angesteuert, dass es einen Teil des ersten Zusatzstoffes (6) zurücksaugt und danach schließt;
- das Ausdosieren durch das zweite Zusatzinjektionsventil (40) wird gestartet und solange fortgesetzt, bis die Konzentration des ersten Zusatzstoffes (6) im A-Dosierventil (17) im Wesentlichen null ist;
- die Mischkammer (70) wird mit Reinigungmittel gespült; und
- nach dem Spülen wird das Ausdosieren des zweiten Zusatzstoffes (7) erneut gestartet.

## Claims

1. A device (1) for providing a plastic (2) which is formed from an A-component (3) and a B-component (4) and optionally from a first additive (6), wherein the device (1) has:
• a mixing chamber (70) in which the A-component (3) and the B-component (4) are mixed to form the plastic (2) and from which the plastic (2) can be metered out,
• an additional valve unit (30), which is fluidically interposed upstream of an A-inlet (71) of the mixing chamber (70) for the A-component (3),
**characterized in that** the additional valve unit (30) has a main pipe (31) for feeding the A-component (3) to the A-inlet (71) and a first additional injection valve (33) for feeding the first additive (6) into the main pipe (31), wherein the first additional injection valve (33) has an outlet nozzle (36), which opens into the main pipe (31), wherein a nozzle tip (37) of the outlet nozzle (36) lies in a central region of the flow cross-section of the main pipe (31), wherein the points of the flow cross-section that lie on an inner portion of a radial connecting line between a cross-section center point and an inner wall of the main pipe (31) fall in the central region, wherein a length of the inner portion is 90% of the radial connecting line.

2. The device (1) according to claim 1, **characterized in that** the flow cross-section of the main pipe (31) is in the shape of a circle, wherein the radial connecting line corresponds to a radius (R) of the circle.

3. The device (1) according to claim 1 or 2, **characterized in that** the main pipe (31) runs substantially vertically.

4. The device (1) according to one of claims 1 to 3, **characterized in that** a center axis (38) of the first additional injection valve (33) is arranged substantially perpendicularly to a center axis (32) of the main pipe (31).

5. The device (1) according to one of claims 1 to 4, **characterized in that** at least a second additional injection valve (40) for feeding a second additive is provided, wherein the second additional injection valve (40) has an outlet nozzle (36), which opens into the main pipe (31), and the nozzle tip (37) of which lies in the central region of the flow cross-section of the main pipe (31).

6. The device (1) according to claim 5, **characterized in that** the first additional injection valve (33) and the second additional injection valve (40) are arranged one behind the other in the longitudinal extension of the main pipe (31).

7. The device (1) according to claim 5 or 6, **characterized in that** the center axis (38) of the first additional injection valve (33), viewed in the circumferential direction of the main pipe (31), is arranged offset from a center axis (38) of the second additional injection valve (40).

8. The device (1) according to one of claims 1 to 7, **characterized in that** an A-metering valve is provided, wherein the main pipe (31) extends substantially perpendicularly to a center axis (23) of the A-metering valve (17), and wherein the A-component (3) enters the A-metering valve (17) through a side inlet (21).

9. The device (1) according to claim 8, **characterized in that** the A-metering valve (17) has an outlet (24), wherein the nozzle tip (37) of the first additional injection valve (33) lies between the cross-section center point and an outlet-side longitudinal half of the main pipe (31).

10. The device (1) according to one of claims 1 to 9, **characterized in that** a cross-section of the outlet nozzle (36) of the first additional injection valve (33) is circular, oval, or teardrop-shaped.

11. The device (1) according to one of claims 1 to 10, **characterized in that** the outlet nozzle (36) of the first additional injection valve (33) has an angle of approximately 90°, and the nozzle tip (37) points in the longitudinal direction of the main pipe (31).

12. The device (1) according to one of claims 1 to 10, **characterized in that** an angle of inclination of between 20 and 70° is provided between the outlet nozzle (36) and a center axis (38) of the first additional injection valve (33).

13. A method for metering out a plastic (2) using a device (1) according to one of claims 1 to 12, **characterized in that,** after metering out has taken place, the first additional injection valve (33) is controlled in such a way that a small portion of the A-component (3) is drawn into the outlet nozzle (36) of the first additional injection valve (33).

14. The method according to claim 13 using the device (1) according to one of claims 5 to 7, **characterized in that** the first additional injection valve (33), viewed in the flow direction of the main pipe (31), is arranged upstream of the second additional injection valve (40), wherein the first additive (6) is formed as a first dye (6) and is lighter in color than the second additive (7), which is formed as a second dye (7).

15. The method according to claim 14, **characterized in that,** between the metering out through the first additional injection valve (33) and the metering out through the second additional injection valve (40), the following steps are initiated for the purpose of rinsing:
- the metering out through the first additional injection valve (33) is stopped, wherein the A-component (3) continues to flow;
- the first additional injection valve (40) is controlled in such a way that it draws back some of the first additive (6) and then closes;
- the metering out through the second additional injection valve (40) is started and is continued until the concentration of the first additive (6) in the A-metering valve (17) is essentially zero;
- the mixing chamber (70) is rinsed with cleaning agent; and
- after rinsing, metering out of the second additive (7) is started again.

## Revendications

1. Dispositif (1) pour la fourniture d'une matière plastique (2) qui est formée à partir d'un composant A (3) et d'un composant B (4) ainsi que, éventuellement, d'un premier additif (6), dans lequel le dispositif (1) présente :
• une chambre de mélange (70), dans laquelle le composant A (3) et le composant B (4) sont mélangés pour former la matière plastique (2) et à partir de laquelle la matière plastique (2) peut être dosée,
• une unité à soupapes pour additifs (30) qui est montée par communication fluidique en amont d'une entrée A (71) de la chambre de mélange (70) pour le composant A (3),
**caractérisé en ce que** l'unité à soupapes pour additifs (30) présente un tube principal (31) pour l'amenée du composant A (3) à l'entrée A (71) et une première soupape d'injection pour additif (33) pour l'amenée du premier additif (6) dans le tube principal (31), dans lequel la première soupape d'injection pour additif (33) présente une buse de sortie (36) débouchant dans le tube principal (31), dans lequel une pointe de buse (37) de la buse de sortie (36) est située dans une zone centrale de la section transversale d'écoulement du tube principal (31), dans lequel les points de la section transversale d'écoulement tombent dans la zone centrale, lesquels points sont situés sur une section intérieure d'une droite de liaison radiale entre un centre de section transversale et une paroi intérieure du tube principal (31), dans lequel une longueur de la section intérieure est égale à 90 % de la droite de liaison radiale.

2. Dispositif (1) selon la revendication 1, **caractérisé en ce que** la section transversale d'écoulement du tube principal (31) présente la forme d'un cercle, dans lequel la droite de liaison radiale correspond à un rayon (R) du cercle.

3. Dispositif (1) selon la revendication 1 ou 2, **caractérisé en ce que** le tube principal (31) s'étend sensiblement verticalement.

4. Dispositif (1) selon l'une des revendications 1 à 3, **caractérisé en ce qu'**un axe central (38) de la première soupape d'injection pour additif (33) est disposé de manière sensiblement perpendiculaire à un axe central (32) du tube principal (31).

5. Dispositif (1) selon l'une des revendications 1 à 4, **caractérisé en ce qu'**au moins une seconde soupape d'injection pour additif (40) pour l'amenée d'un second additif est prévue, dans lequel la seconde soupape d'injection pour additif (40) présente une buse de sortie (36) débouchant dans le tube principal (31) et dont la pointe de buse (37) est située dans la zone centrale de la section transversale d'écoulement du tube principal (31).

6. Dispositif (1) selon la revendication 5, **caractérisé en ce que** la première soupape d'injection pour additif (33) et la seconde soupape d'injection pour additif (40) sont disposées l'une derrière l'autre, vues dans l'extension longitudinale du tube principal (31).

7. Dispositif (1) selon la revendication 5 ou 6, **caractérisé en ce que** l'axe central (38) de la première soupape d'injection pour additif (33), vu dans la direction circonférentielle du tube principal (31), est disposé de manière à être décalé par rapport à un axe central (38) de la seconde soupape d'injection pour additif (40).

8. Dispositif (1) selon l'une des revendications 1 à 7, **caractérisé en ce qu'**une soupape de dosage A est prévue, dans lequel le tube principal (31) s'étend sensiblement perpendiculairement à un axe central (23) de la soupape de dosage A (17), et dans lequel le composant A (3) entre dans la soupape de dosage A (17) par une entrée latérale (21).

9. Dispositif (1) selon la revendication 8, **caractérisé en ce que** la soupape de dosage A (17) présente une sortie (24), dans lequel la pointe de buse (37) de la première soupape d'injection pour additif (33) est située entre le centre de section transversale et une moitié longitudinale côté sortie du tube principal (31).

10. Dispositif (1) selon l'une des revendications 1 à 9, **caractérisé en ce qu'**une section transversale de la buse de sortie (36) de la première soupape d'injection pour additif (33) est en forme de cercle, ovale ou en forme de goutte.

11. Dispositif (1) selon l'une des revendications 1 à 10, **caractérisé en ce que** la buse de sortie (36) de la première soupape d'injection pour additif (33) présente un angle d'environ 90° et la pointe de buse (37) est orientée dans la direction longitudinale du tube principal (31).

12. Dispositif (1) selon l'une des revendications 1 à 10, **caractérisé en ce qu'**un angle d'inclinaison compris entre 20 et 70° est donné entre la buse de sortie (36) et un axe central (38) de la première soupape d'injection pour additif (33).

13. Procédé permettant le dosage d'une matière plastique (2) avec un dispositif (1) selon l'une des revendications 1 à 12, **caractérisé en ce que** la première soupape d'injection pour additif (33) est commandée, après un dosage effectué, de sorte qu'une petite partie du composant A (3) est aspirée dans la buse de sortie (36) de la première soupape d'injection pour additif (33).

14. Procédé selon la revendication 13 avec le dispositif (1) selon l'une des revendications 5 à 7, **caractérisé en ce que** la première soupape d'injection pour additif (33), vue dans le sens d'écoulement du tube principal (31), est disposée en amont de la seconde soupape d'injection pour additif (40), dans lequel le premier additif (6) est réalisé sous forme de premier colorant (6) et est réalisé de manière à être plus clair que le second additif (7), qui est réalisé sous forme de second colorant (7).

15. Procédé selon la revendication 14, **caractérisé en ce qu'**entre le dosage au moyen de la première soupape d'injection pour additif (33) et le dosage au moyen de la seconde soupape d'injection pour additif (40), pour le rinçage, les étapes suivantes sont introduites :
- le dosage au moyen de la première soupape d'injection pour additif (33) est arrêté, dans lequel le composant A (3) continue à s'écouler ;
- la première soupape d'injection pour additif (40) est commandée de sorte qu'elle aspire vers l'arrière une partie du premier additif (6) et se ferme ensuite ;
- le dosage au moyen de la seconde soupape d'injection pour additif (40) est lancé et se poursuit jusqu'à ce que la concentration du premier additif (6) dans la soupape de dosage A (17) soit sensiblement nulle ;
- la chambre de mélange (70) est rincée avec un agent de nettoyage ; et
- après le rinçage, le dosage du second additif (7) est lancé de nouveau.
